# EUROPÄISCHE PATENTANMELDUNG

(11) **EP 4 742 464 A1**
(43) Veröffentlichungstag der Anmeldung: **13.05.2026**
(21) Anmeldenummer: 25210349.4
(22) Anmeldetag: 22.10.2025
(51) Int. Cl.: H01R 43/05, H01R 43/052, B25J 15/00, H01R 43/28, H02G 1/00

(54) **ZENTRIERVORRICHTUNG SOWIE SYSTEM AUS BEARBEITUNGSSTATION UND ZENTRIERVORRICHTUNG UND VERFAHREN ZUM BETREIBEN DER ZENTRIERVORRICHTUNG**

(30) Priorität: 08.11.2024 DE 102024132675
(71) Anmelder: MD ELEKTRONIK GmbH, 84478 Waldkraiburg (DE)
(72) Erfinder: Strauß, Benedikt, 83559 Mittergars (DE)
(74) Vertreter: Winter, Brandl - Partnerschaft mbB

(57) **Zusammenfassung**

Die Erfindung betrifft eine Zentriervorrichtung (1), mit einer Greifeinheit aus zwei Greiferbacken (2, 3), die zum Öffnen und Schließen der Greifeinheit in einer Greifer-Betätigungsrichtung (B) linear verschieblich sind und jeweils ein Werkzeug (4, 5) mit einer Werkzeugkontur (6, 7) aufweisen, wobei eine erste Greiferbacke (2) der zwei Greiferbacken (2, 3) einen Arm (8) aufweist, der sich ausgehend von dem Werkzeug (4) mit einem im Wesentlichen bügelförmigen Verlauf erstreckt, wobei eine Öffnung des bügelförmigen Verlaufs senkrecht zur Greifer-Betätigungsrichtung (B) und senkrecht zur Kabel-Zuführrichtung (Z) ausgerichtet ist. Die Erfindung betrifft auch ein System aus einer Bearbeitungsstation zum Bearbeiten des Kabels und einer Zentriervorrichtung (1) sowie ein Verfahren zum Betreiben einer Zentriervorrichtung (1).

## Beschreibung

### Technisches Gebiet

Die Erfindung betrifft eine Zentriervorrichtung zur ausgerichteten Aufnahme eines Kabels, mit einer Greifeinheit aus zwei Greiferbacken. Zudem betrifft die Erfindung ein System aus einer Bearbeitungsstation und der Zentriervorrichtung. Weiter betrifft die Erfindung ein Verfahren zum Betreiben der Zentriervorrichtung.

### Hintergrund der Erfindung

Um ein Kabelende eines Kabels, insbesondere mehradrigen Kabels, präzise bearbeiten zu können, wird das Kabelende abgemantelt, um die Ader(n) freizulegen. Für die weitere Bearbeitung wird die Ader in einer Zentriervorrichtung aufgenommen und darin gehalten, wobei mehrere Adern möglichst innerhalb einer definierten Ebene ausgerichtet werden. Nach der Bearbeitung wird die Zentriervorrichtung geöffnet, so dass das Kabel weitertransportiert werden kann.

Aus dem Stand der Technik ist eine solche Zentriervorrichtung bereits aus der WO 2016/088088 A1 bekannt. Weitere Vorrichtungen, die auf diesem Gebiet eingesetzt werden, sind bereits aus der US 2024/0079863 A1 oder der US 4,715,099 A bekannt.

Dabei besteht jedoch das Problem, dass das Kabel in einer (üblicherweise zur Kabel-Längsachsen senkrechten/quer ausgerichteten) Kabel-Zuführrichtung in die Zentriervorrichtung hineingeführt werden und einer der Kabel-Zuführrichtung entgegengesetzten Kabel-Herausführrichtung wieder herausgeführt werden. Insbesondere versperrt zumindest eine (obere) Greiferbacke einen Weg, um eine Durchfahrt des Kabels, also ein Zuführen und Herausführen des Kabels in derselben Richtung, zu ermöglichen. Dies hat zur Folge, dass die Kabelförderung komplex aufgebaut sein muss, um das wieder Herausführen zu ermöglichen, was wiederum nachteilige Auswirkungen auf die Kompaktheit der Zentriervorrichtung hat. Kurzbeschreibung der Erfindung

Es ist also die Aufgabe der Erfindung, eine Zentriervorrichtung sowie ein System aus einer Bearbeitungsstation und der Zentriervorrichtung und ein Verfahren zum Betreiben der Zentriervorrichtung bereitzustellen, bei der die Zentriervorrichtung möglichst kompakt aufgebaut ist und gleichzeitig ein besonders effektives und einfaches Zuführen und Herausführen des Kabels in die Zentriervorrichtung sichergestellt wird.

Diese Aufgabe wird durch eine Zentriervorrichtung mit den Merkmalen des Patentanspruchs 1 gelöst sowie durch ein System bzw. ein Verfahren mit den Merkmalen der nebengeordneten Patentansprüche gelöst. Vorteilhafte Ausgestaltungen sind Gegenstand der abhängigen Ansprüche.

Die Zentriervorrichtung dient zur ausgerichteten Aufnahme eines, insbesondere mehradrigen, Kabels. Die Zentriervorrichtung weist eine Greifeinheit aus zwei Greiferbacken, d.h. eine erste Greiferbacke und eine zweite Greiferbacke, auf.

Zum Öffnen und Schließen der Greifeinheit, d.h. zum Betätigen der Greifeinheit, sind die zwei Greiferbacken in einer Greifer-Betätigungsrichtung (jeweils) linear verschieblich. Insbesondere können die zwei Greiferbacken in jeweils zueinander entgegengesetzte Richtungen, d.h. (zum Schließen) aufeinander zu und (zum Öffnen) voneinander weg, linear verschieblich sein.

Die zwei Greiferbacken weisen jeweils ein Werkzeug mit einer Werkzeugkontur auf. Die Werkzeugkonturen sind einander in der Greifer-Betätigungsrichtung zugewandt, d.h. in der Greifer-Betätigungsrichtung gegenüberliegend angeordnet. Insbesondere kann jede Werkzeugkontur in Richtung der Werkzeugkontur der jeweils anderen Greiferbacke hervorstehen.

Die Werkzeugkonturen erstrecken sich entlang einer zur Greifer-Betätigungsrichtung senkrechten Kabel-Zuführrichtung, um zumindest eine Ader, insbesondere mehrere Adern, des Kabels insbesondere formschlüssig aufzunehmen. D.h., dass jede Werkzeugkontur (d.h. ein jeweiliger Querschnitt der Werkzeugkontur) ausgebildet ist, um einen jeweiligen Querschnitt der Ader(n) (um eine Kabel-Längsachse bzw. (Einzel-)Ader-Längsachse) zumindest teilweise zu umschließen. Insbesondere sind die Werkzeugkonturen mit einem Zentriermittel ausgebildet, wobei durch das Zentriermittel eine Ader des Kabels aufnehmbar ist. Vorzugsweise sind die Werkzeugkonturen mit mehreren Zentriermitteln ausgebildet, wobei in jedem Zentriermittel eine Ader des Kabels aufnehmbar ist und vorzugsweise sämtliche/alle Adern des Kabels in den mehreren Zentriermitteln aufnehmbar sind. Die Werkzeugkonturen mit den mehreren Zentriermitteln sind vorzugsweise ausgebildet, die Adern des Kabels zwischen den Werkzeugen zur entlang der Kabel-Zuführrichtung parallel beabstandeten Ausrichtung ihrer (Einzel-)Ader-Längsachsen aufzunehmen. Mit anderen Worten sind die Kabel-Längsachse, die Greifer-Betätigungsrichtung und die Kabel-Zuführrichtung jeweils zueinander senkrecht ausgerichtet.

Gemäß einem Aspekt der vorliegenden Erfindung weist die erste Greiferbacke einen (ersten) Arm auf. Insbesondere kann sich der Arm der ersten Greiferbacke von dem Werkzeug (der ersten Greiferbacke) ausgehend erstrecken. Vorzugsweise erstreckt sich der Arm der ersten Greiferbacke im Wesentlichen in einer zur Kabel-Zuführrichtung senkrechten Ebene. Der Arm weist einen im Wesentlichen bügelförmigen Verlauf auf. Unter einem bügelförmigen Verlauf wird eine U-Form oder eine V-Form verstanden, die durch zwei beabstandete Schenkel gebildet ist, die an einem geschlossenen Ende des bügelförmigen Verlaufs miteinander verbunden sind und an einem offenen Ende des bügelförmigen Verlaufs unverbunden sind. Das heißt, dass der Arm zwei (im Wesentlichen parallel ausgerichtet oder aufeinander zulaufende) Schenkel aufweist, die voneinander beabstandet und an einem Schenkelende miteinander verbunden sind. Insbesondere kann ein (erstes/freies) Schenkelende mit dem Werkzeug der ersten Greiferbacke verbunden oder verbindbar sein. Die jeweiligen (zweiten/geschlossenen) Schenkelenden der zwei Schenkel können direkt miteinander verbunden sein oder der Arm kann einen (geraden oder gebogenen) die zwei Schenkel verbindenden Steg aufweisen. Das heißt, dass der Arm U-förmig oder V-förmig ausgebildet sein kann.

Gemäß dem Aspekt der vorliegenden Erfindung ist eine Öffnung des bügelförmigen Verlaufs senkrecht zur Greifer-Betätigungsrichtung und senkrecht zur Kabel-Zuführrichtung ausgerichtet ist. Das heißt, dass die Öffnung, die einem geschlossenen Ende des bügelförmigen Verlaufs, d.h. der Verbindung zwischen den Schenkeln, gegenüberliegt, entlang der Kabel-Längsachse ausgerichtet ist. Mit anderen Worten sind die (sich im Wesentlichen in Kabel-Längsachse erstreckenden) Schenkel des Arms an den ersten (freien) Schenkelenden in der Greifer-Betätigungsrichtung beabstandet und an den zweiten (geschlossenen) Schenkelenden in der Greifer-Betätigungsrichtung miteinander verbunden, um den bügelförmigen Verlauf zu bilden. Mit anderen Worten weist die erste Greiferbacke von dem Kabel bzw. dem Werkzeug der ersten Greiferbacke aus gesehen einen bügelförmig nach hinten (und nach unten) kragenden Arm auf.

Dies hat den Vorteil, dass durch den bügelförmigen Verlauf des Arms zwischen den beiden Schenkeln des bügelförmigen Verlaufs eine Durchgangsöffnung in der Kabel-Zuführrichtung gebildet wird, wobei ein freies Kabelende durch die (dem Kabel zugewandte) Öffnung in den Arm hineinragen kann und somit in der Kabel-Zuführrichtung durch die Durchgangsöffnung hindurchgeführt werden kann. Entsprechend kann durch den bügelförmigen Verlauf des Arms der (oberen) Greiferbacke eine Durchfahr-Funktion für das Kabel realisiert werden, ohne dass sich besondere Anforderungen an einen Aktor zur Linearverschiebung der beiden Greiferbacken ergibt, da eine übliche Anbindung der (oberen) Greiferbacke bestehen bleiben kann.

Gemäß einer Ausführungsform kann die zweite Greiferbacke einen (zweiten) Arm aufweisen. Insbesondere kann sich der Arm der zweiten Greiferbacke von dem Werkzeug (der zweiten Greiferbacke) ausgehend erstrecken. Vorzugsweise erstreckt sich der Arm der zweiten Greiferbacke im Wesentlichen in einer zur Kabel-Zuführrichtung senkrechten Ebene. Der Arm der zweiten Greiferbacke kann einen im Wesentlichen geradlinigen Verlauf aufweisen.

Vorzugsweise können die Arme der zwei Greiferbacken entlang der Kabel-Zuführrichtung im Wesentlichen parallelversetzt zueinander angeordnet sein. Das heißt, dass die Arme der zwei Greiferbacken in der Kabel-Zuführrichtung hintereinander angeordnet sind. So wird ermöglicht, dass die zwei Greiferbacken beim Schließen der Greifeinheit zumindest abschnittsweise aneinander vorbeigeführt werden.

Gemäß einer Ausführungsform kann die Greifeinheit zwischen einer geöffneten Stellung und einer geschlossenen Stellung betätigbar sein. In der geöffneten Stellung sind die Werkzeuge der zwei Greiferbacken weiter voneinander entfernt als in der geschlossenen Stellung. Vorzugsweise können sich die Werkzeugkonturen in der geschlossenen Stellung abschnittsweise überlappen. Vorzugsweise umschließen die Werkzeugkonturen in der geschlossenen Stellung den jeweiligen Querschnitt der Ader(n) vollständig. So kann eine Zentrierung der einzelnen Adern des Kabels gewährleistet werden.

Vorzugsweise können die zweite Greiferbacke und die Öffnung in der geöffneten Stellung der Greifeinheit zueinander versetzt in der Greifer-Betätigungsrichtung angeordnet sein. Das heißt, dass in der geöffneten Stellung zwischen den Schenkeln (aufgrund der Positionierung der zwei Greiferbacken zueinander) eine Durchfahrt in der Kabel-Zuführrichtung möglich ist. Mit anderen Worten ist der Arm der zweiten Greiferbacke in der Greifer-Betätigungsrichtung nicht zwischen den Schenkeln positioniert. Somit wird das Durchfahren des Kabels durch den bügelförmigen Verlauf des Arms der ersten Greiferbacke entlang der Kabel-Zuführrichtung auch nicht durch den Arm der zweiten Greiferbacke verhindert.

Zudem können die zweite Greiferbacke und die Öffnung in der geschlossenen Stellung der Greifeinheit im Wesentlichen auf gleicher Höhe in der Greifer-Betätigungsrichtung angeordnet sein. Das heißt, dass in der geöffneten Stellung zwischen den Schenkeln (aufgrund der Positionierung der zwei Greiferbacken zueinander) keine Durchfahrt in der Kabel-Zuführrichtung möglich ist. So kann das Schließen der Greifeinheit ermöglicht werden.

Gemäß einer Ausführungsform kann der Arm der ersten Greiferbacke eine Werkzeugschnittstelle für das Werkzeug (der ersten Greiferbacke) aufweisen. Zusätzlich kann der Arm der zweiten Greiferbacke eine Werkzeugschnittstelle für das Werkzeug (der zweiten Greiferbacke) aufweisen. Über die Werkzeugschnittstelle können der jeweilige Arm und das jeweilige Werkzeug verbunden oder verbindbar sein.

Vorzugsweise kann die Werkzeugschnittstelle der ersten Greiferbacke an einem ersten, insbesondere in der Greifer-Betätigungsrichtung oberen, Schenkel des bügelförmigen Verlaufs ausgebildet sein. Dies hat den Vorteil, dass die Werkzeugkontur der ersten Greiferbacke in der gewünschten Stellung positioniert werden kann.

Vorzugsweise kann die Werkzeugschnittstelle der ersten Greiferbacke an einem freien Ende des ersten Schenkels ausgebildet sein. Somit wird ein Überstand in Richtung zu dem Kabel hin vermieden und ein kompakter Aufbau bereitgestellt.

Gemäß einer Ausführungsform kann der Arm der ersten Greiferbacke eine Betätigungsschnittstelle für einen Aktor aufweisen. Zusätzlich kann der Arm der zweiten Greiferbacke eine Betätigungsschnittstelle für einen Aktor, vorzugsweise den Aktor, aufweisen. Über die Betätigungsschnittstelle können der jeweilige Arm und der (vorzugsweise gemeinsame) Aktor verbunden oder verbindbar sein.

Vorzugsweise kann die Betätigungsschnittstelle der ersten Greiferbacke an einem zweiten, insbesondere in der Greifer-Betätigungsrichtung unteren, Schenkel des bügelförmigen Verlaufs ausgebildet sein. Das heißt, dass die Betätigungsschnittstelle an einem anderen Schenkel als die Werkzeugschnittstelle ausgebildet ist. So kann eine Anordnung des Aktors unterhalb der Zentriervorrichtung ermöglicht werden.

Vorzugsweise kann die Betätigungsschnittstelle der ersten Greiferbacke an einem freien Ende des zweiten Schenkels ausgebildet sein. Somit wird ein Überstand in Richtung zu dem Kabel hin vermieden und ein kompakter Aufbau bereitgestellt.

Gemäß einer bevorzugten Ausführungsform können die zwei Greiferbacken jeweils eine Werkzeugaufnahme zur lösbaren Aufnahme des jeweiligen Werkzeugs aufweisen. Die Werkzeugaufnahmen sind insbesondere zur reproduzierbaren Aufnahme des jeweiligen Werkzeugs ausgebildet. Beispielsweise können die Werkzeugaufnahmen jeweils eine Formschlussgeometrie zur Steckverbindung mit dem jeweiligen Werkzeug aufweisen. Zudem können die Werkzeugaufnahmen jeweils eine Befestigungsaufnahme, wie eine Schraubenaufnahme, zum Anschrauben des jeweiligen Werkzeugs aufweisen. Dies hat den Vorteil, dass ein einfacher Werkzeugwechsel ermöglicht wird.

Gemäß einer bevorzugten Ausführungsform können die Werkzeugkonturen ausgebildet sein, die zumindest eine Ader, insbesondere mehrere Adern, des Kabels in der geschlossenen Stellung der Greifeinheit klemmend zu halten. Das heißt, dass durch die Werkzeugkonturen vorzugsweise sowohl eine zentrierte Ausrichtung als auch eine (temporäre) Fixierung einer Längsposition der zumindest einen Ader realisiert ist.

Gemäß einer bevorzugten Ausführungsform kann die Zentriervorrichtung einen Aktor zur Betätigung der Greifeinheit aufweisen. Der Aktor kann insbesondere als ein Linearaktor ausgebildet sein. Beispielsweise kann der Aktor als ein Parallelgreifer ausgebildet sein. Das heißt, dass der Aktor zur Linearverschiebung der zwei Greiferbacken ausgebildet ist. Mit anderen Worten wird nur ein Aktor verwendet. So kann ein kostengünstiger und kompakter Aufbau der Zentriervorrichtung gewährleistet werden.

Insbesondere kann der Aktor an der jeweiligen Betätigungsschnittstelle der zwei Greiferbacken angebunden oder anbindbar sein. So kann eine geeignete Bewegungsübertragung sichergestellt werden.

Gemäß einer bevorzugten Ausführungsform kann der Aktor ausgebildet sein, die zwei Greiferbacken synchronisiert zu betätigen. Das heißt, dass die erste Greiferbacke und die zweite Greiferbacke gleichzeitig durch den Aktor betätigbar sind. Dies hat den Vorteil, dass ein einfacher Aufbau des Aktors möglich ist.

Gemäß einer bevorzugten Ausführungsform kann der Aktor so ausgebildet sein, dass die zwei Greiferbacken zum Öffnen und Schließen jeweils einen zueinander betragsmäßig gleichen Hub haben. Das heißt, dass die erste Greiferbacke und die zweite Greiferbacke um denselben Betrag entlang ihres jeweiligen (in entgegengesetzte Richtungen verlaufenden) Stellwegs bewegt werden. Dies hat den Vorteil, dass ein einfacher Aufbau des Aktors möglich ist.

Die Erfindung betrifft auch ein System aus einer Bearbeitungsstation zum Bearbeiten des Kabels und der beschriebenen Zentriervorrichtung. Die Bearbeitungsstation kann beispielsweise zum sogenannten Nullschneiden und/oder zum Abisolieren der zumindest einen Ader des Kabels, vorzugsweise zum Abisolieren sämtlicher Ader des Kabels, und/oder zum Crimpen des Kabels dienen.

Gemäß einer bevorzugten Ausführungsform können die Bearbeitungsstation und die Zentriervorrichtung quer zur Kabel-Zuführrichtung, insbesondere senkrecht zur Kabel-Zuführrichtung und senkrecht zur Greifer-Betätigungsrichtung, zueinander versetzt angeordnet sein. Das heißt, dass die Bearbeitungsstation und die Zentriervorrichtung entlang der Kabel-Längsrichtung versetzt bzw. (direkt) hintereinander angeordnet sind. So kann eine Bearbeitung eines freien Endes des (in der Zentriervorrichtung aufgenommenen) Kabels durch die Bearbeitungsstation ermöglicht werden.

Gemäß einer bevorzugten Ausführungsform kann sich der Arm der ersten Greiferbacke von dem Werkzeug der ersten Greiferbacke aus in Richtung zu der Bearbeitungsstation hin erstrecken. Das heißt, dass der Arm der ersten Greiferbacke zwischen dem Werkzeug und der Bearbeitungsstation angeordnet ist. Mit anderen Worten erstreckt sich der Arm von dem Werkzeug der ersten Greiferbacke aus nach hinten. Dies hat den Vorteil, dass das Kabel (unabhängig von der Geometrie der Bearbeitungsstation und/oder der Zentriervorrichtung) vor dem Arm vorbeigeführt werden kann und nur das freie Ende des Kabels durch den (bügelförmigen) Arm der ersten Greiferbacke hindurchfährt.

Die Erfindung betrifft auch ein Verfahren zum Betreiben der beschriebenen Zentriervorrichtung, mit den folgenden Schritten:
- Zuführen des Kabels entlang der Kabel-Zuführrichtung,
- Schließen der Greifeinheit,
- Öffnen der Greifeinheit,
- Herausführen des Kabels entlang der Kabel-Zuführrichtung,

Gemäß einem Aspekt der Erfindung erfolgt das Zuführen und das Herausführen in derselben Richtung entlang der Kabel-Zuführrichtung, wobei ein freies Ende des Kabels beim Zuführen oder Herausführen durch den bügelförmigen Verlauf des Arms der ersten Greiferbacke hindurchgeführt wird. Das heißt, dass das Zuführen und das Herausführen gerade nicht in entgegengesetzte Richtungen erfolgt, sondern, das Herausführen erfolgt in einer (gedachten) Verlängerung der Zuführ-Richtung, also in Fortsetzung der Zuführ-Bewegung.

Gemäß einer bevorzugten Ausführungsform erfolgt zwischen dem Schließen der Greifeinheit und dem Öffnen der Greifeinheit eine Kabelbearbeitung, insbesondere des freien Endes des Kabels, durch die Bearbeitungsstation des beschriebenen Systems.

Mit anderen Worten betrifft die Erfindung eine Zentriervorrichtung zur Mehradernzentrierung mit einem bügelförmigen Halter. Dabei ermöglicht die bügelförmige Geometrie der Werkzeugschnittstelle (bzw. des Arms der ersten Greiferbacke) die Durchfahrt der Adern. Zudem ermöglicht die parallele Schließbewegung der Greifeinheit, dass sich unterschiedliche Aderdurchmesser lediglich auf den Schließhub auswirken, wodurch keine unterschiedlichen Werkzeuge (für unterschiedliche Aderdurchmesser) erforderlich sind. Weiter weist die Zentriervorrichtung einen Aktor zur Betätigung auf, wobei der Aktor nur eine Bewegungsrichtung haben muss.

Weitere Vorteile und Merkmale ergeben sich aus den abhängigen Ansprüchen sowie aus der Beschreibung eines bevorzugten Ausführungsbeispiels der Erfindung
Die Erfindung wird nachfolgend mit Hilfe von Zeichnungen erläutert.
Fign. 1 und 2 zeigen perspektivische Ansichten aus einer jeweils anderen Blickrichtung einer Zentriervorrichtung gemäß der vorliegenden Erfindung mit einer Greifeinheit in einer geöffneten Stellung,
Fig. 3 zeigt eine Ansicht der Zentriervorrichtung in einer geschlossenen Stellung,
Fign. 4 und 5 zeigen Seitensichten der Zentriervorrichtung (ohne Werkzeuge) mit der Greifeinheit in der geschlossenen Stellung, und
Fig. 6 zeigt eine Seitenansicht der Zentriervorrichtung (ohne Werkzeuge) mit der Greifeinheit in der geöffneten Stellung.

### Beschreibung einer bevorzugten Ausführungsform

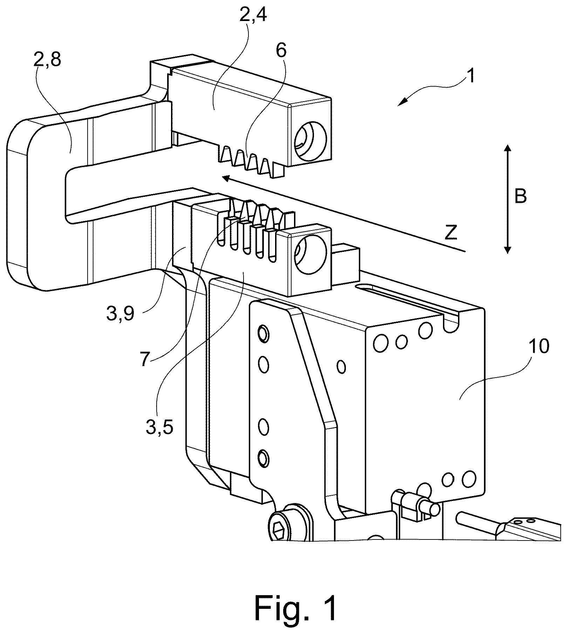

Fign. 1 bis 3 zeigen eine Zentriervorrichtung 1. Die Zentriervorrichtung 1 dient zur ausgerichteten Aufnahme eines Kabels. Das (nicht dargestellte) Kabel weist zumindest eine Ader und vorzugsweise mehrere Adern auf.

Die Zentriervorrichtung 1 weist eine Greifeinheit auf. Die Greifeinheit weist eine erste Greiferbacke 2 und eine zweite Greiferbacke 3 auf. Die zwei Greiferbacken 2, 3 sind zum Öffnen und Schließen der Greifeinheit in einer Greifer-Betätigungsrichtung B zueinander linear verschieblich. In der dargestellten Ausführungsform entspricht die Greifer-Betätigungsrichtung B im Wesentlichen einer Vertikalrichtung. In der dargestellten Ausführungsform ist die erste Greiferbacke 2 eine obere Greiferbacke und die zweite Greiferbacke 3 eine untere Greiferbacke.

Die zwei Greiferbacken 2, 3 können vorzugsweise jeweils in ihrer Position entlang der Greifer-Betätigungsrichtung B linear verschieblich sein. Vorzugsweise können die zwei Greiferbacken 2, 3 in jeweils zueinander entgegengesetzte Richtungen linear verschieblich sein. Insbesondere werden die zwei Greiferbacken 2, 3 zum Öffnen voneinander weg verlagert und zum Schließen aufeinander zu verlagert. In der dargestellten Ausführungsform wird beim Öffnen der Greifeinheit die erste Greiferbacke 2 nach oben verlagert und die zweite Greiferbacke 3 nach unten verlagert. In der dargestellten Ausführungsform wird beim Schließen der Greifeinheit die erste Greiferbacke 2 nach unten verlagert und die zweite Greiferbacke 3 nach oben verlagert.

Die zwei Greiferbacken 2, 3 weisen jeweils ein Werkzeug mit einer Werkzeugkontur auf. Die erste Greiferbacke 2 weist ein erstes Werkzeug 4 auf. Die zweite Greiferbacke weist ein zweites Werkzeug 5 auf. Das erste Werkzeug 4 weist eine erste Werkzeugkontur 6 auf. Das zweite Werkzeug 5 weist eine zweite Werkzeugkontur 7 auf. Die Werkzeugkonturen 6, 7 dienen zur formschlüssigen Aufnahme der Ader des Kabels, insbesondere sämtlicher Adern des Kabels. Die Werkzeugkonturen 6, 7 dienen insbesondere dazu, die Ader des Kabels, insbesondere sämtliche Adern des Kabels in der geschlossenen Stellung der Greifeinheit klemmend zu halten.

Die Werkzeugkonturen 6, 7 sind einander in der Greifer-Betätigungsrichtung B zugewandt sind. Die Werkzeugkonturen 6, 7 weisen jeweils zumindest ein Zentriermittel und vorzugsweise mehrere Zentriermittel auf. Die Zentriermittel stehen in der Greifer-Betätigungsrichtung B zu dem jeweils anderen Werkzeug 4, 5 hin vor. Die Zentriermittel sind in Form einer Zahnreihe ausgebildet, zwischen denen die Ader(n) des Kabels zentriert aufnehmbar ist/sind. Dabei ist das Kabel insbesondere so zwischen den Werkzeugkonturen 6, 7 aufnehmbar, dass ein freies Kabelende über die Werkzeuge 4, 5 hinaus hervorsteht, um das freie Kabelende bearbeiten zu können, während es in der Zentriervorrichtung 1 gehalten wird.

Die Werkzeugkonturen 6, 7 erstrecken sich entlang einer zur Greifer-Betätigungsrichtung senkrechten Kabel-Zuführrichtung Z. Die Kabel-Zuführrichtung Z ist senkrecht zu einer Kabel-Längsrichtung eines in den Werkzeugkonturen 6, 7 aufgenommenen Kabels. Das heißt, dass die Zahnreihe mehrere entlang der Kabel-Zuführrichtung Z versetzte Zähne aufweist, um die Adern des Kabels so auszurichten, dass die Längsachsen der einzelnen Adern des Kabels zueinander parallelversetzt sind.

Die erste Greiferbacke 2 weist einen ersten Arm 8 auf. Der erste Arm 8 erstreckt sich im Wesentlichen in einer zu der Kabel-Zuführrichtung Z senkrechten Ebene. Der erste Arm 8 weist einen im Wesentlichen bügelförmigen Verlauf auf. Unter einem bügelförmigen Verlauf wird eine U-Form oder eine V-Form verstanden, die durch zwei beabstandete Schenkel gebildet ist, die an einem geschlossenen Ende des bügelförmigen Verlaufs miteinander verbunden sind und an einem offenen Ende des bügelförmigen Verlaufs unverbunden sind, also eine Öffnung bilden. Die Öffnung des bügelförmigen Verlaufs ist dabei senkrecht zur Greifer-Betätigungsrichtung B und senkrecht zur Kabel-Zuführrichtung Z ausgerichtet. Das heißt, dass die Öffnung entlang der Kabel-Längsrichtung ausgerichtet ist. Dabei ist der erste Arm 8 ausgebildet, dass ein zwischen den Werkzeugkonturen 6, 7 aufgenommenes Kabel, dessen freies Kabelende über die Werkzeuge 4, 5 hinaus hervorsteht und damit in der Kabel-Längsrichtung in die Öffnung hineinragt, in der Kabel-Zuführrichtung Z zwischen den Schenkeln des ersten Arms 8 hindurchgeführt werden kann.

Die zweite Greiferbacke 3 weist einen zweiten Arm 9 auf. Der zweite Arm 9 erstreckt sich im Wesentlichen in einer Kabel-Zuführrichtung Z senkrechten Ebene. Der zweite Arm 9 weist einen im Wesentlichen geraden Verlauf auf.

Der erste Arm 8 und der zweite Arm 9 sind im Wesentlichen parallel versetzt entlang der Kabel-Zuführrichtung Z angeordnet. Insbesondere sind der erste Arm 8 und der zweite Arm 9 direkt hintereinander in der Kabel-Zuführrichtung Z angeordnet. Entsprechend sind erste Arm 8 und der zweite Arm 9 in der Greifer-Betätigungsrichtung B aneinander vorbeiführbar. In der dargestellten Ausführungsform ist der erste Arm 8 bezüglich der Werkzeugkonturen 6, 7 weiter außen angeordnet und der zweite Arm 9 bezüglich der Werkzeugkonturen 6, 7 weiter innen angeordnet. Alternativ könnte aber auch der zweite Arm 9 in der Kabel-Zuführrichtung Z hinter dem ersten Arm 8 angeordnet sein, auch wenn dies nicht dargestellt ist.

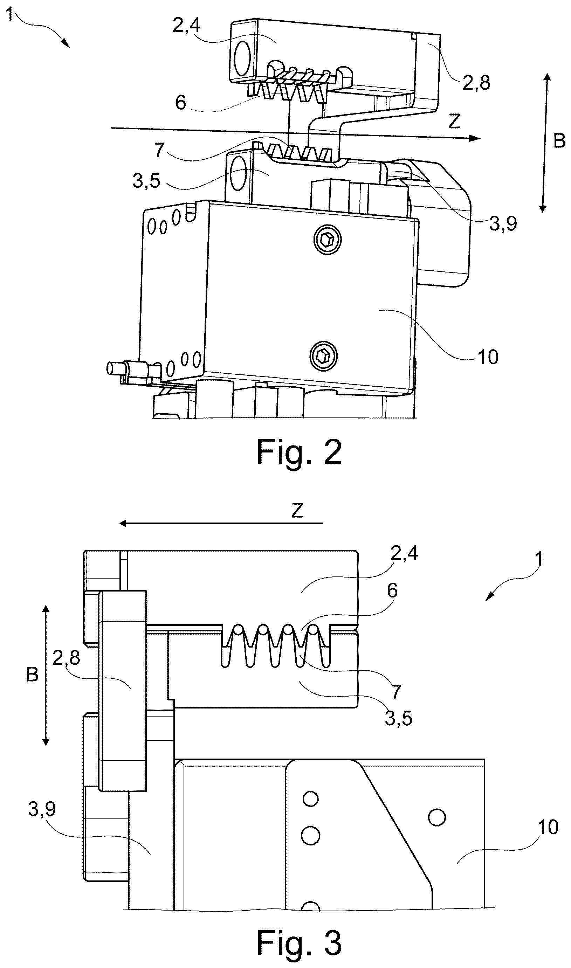

Die Greifeinheit ist zwischen einer geöffneten Stellung (vgl. Fign. 1 und 2) und einer geschlossenen Stellung (vgl. Fig. 3) betätigbar. In der geöffneten Stellung sind die zweite Greiferbacke 3, insbesondere der zweite Arm 9, und die Öffnung in der Greifer-Betätigungsrichtung B zueinander versetzt angeordnet. In der dargestellten Ausführungsform befindet sich der zweite Arm 9 unter der Öffnung in der Greifer-Betätigungsrichtung B. In der geschlossenen Stellung sind die zweite Greiferbacke 3, insbesondere der zweite Arm 9, und die Öffnung in der Greifer-Betätigungsrichtung B auf der gleichen Höhe angeordnet.

Die Zentriervorrichtung 1 weist einen Aktor 10 zur Betätigung der Greifeinheit auf. Der Aktor 10 kann insbesondere als ein Linearaktor ausgebildet sein. Die zwei Greiferbacken 2, 3 können vorzugsweise an einer zu der Kabel-Zuführrichtung Z senkrechten Stirnseite des Aktors 10 angebracht oder anbringbar sein. In der dargestellten Ausführungsform ist der Aktor 10 (direkt) unter den Werkzeugen 4, 5 in der Greifer-Betätigungsrichtung B angeordnet.

Insbesondere kann der Aktor 10 ausgebildet sein, die zwei Greiferbacken 2, 3 synchronisiert zu betätigen. Alternativ oder zusätzlich kann der Aktor 10 so ausgebildet sein, dass die zwei Greiferbacken 2, 3 zum Öffnen und Schließen jeweils einen zueinander betragsmäßig gleichen Hub haben.

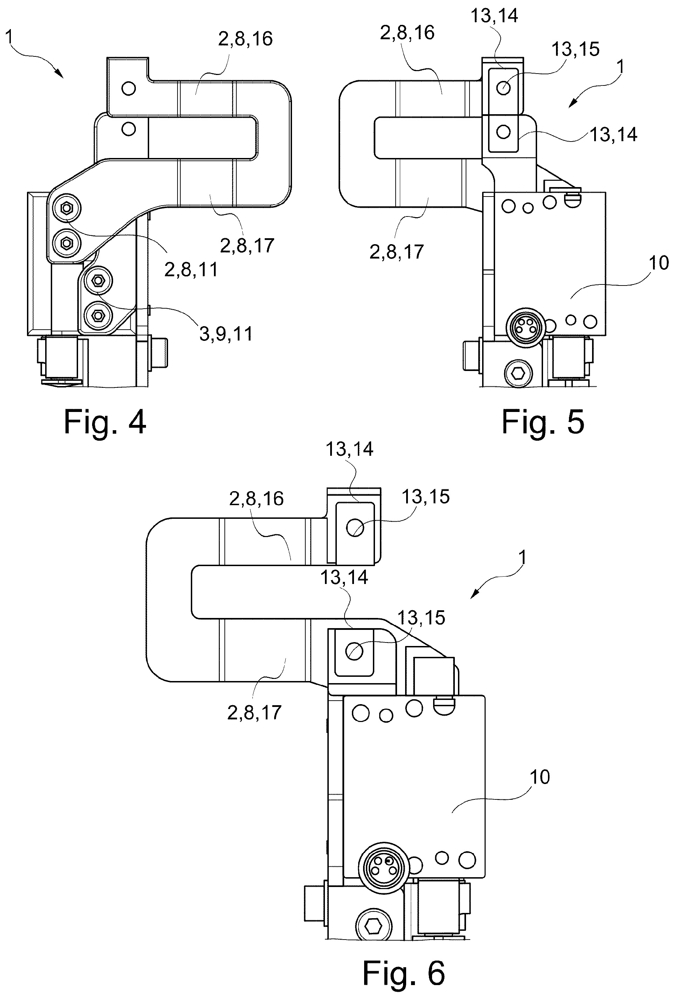

Fign. 4 bis 6 zeigen Ansichten der Zentriervorrichtung 1 ohne daran angebrachte Werkzeuge 4, 5, betrachtet in einer Richtung senkrecht zu der Kabel-Zuführrichtung Z. in Fig. 4 erstreckt sich die Kabel-Zuführrichtung Z aus dem Blatt heraus, in Fign. 5 und 6 erstreckt sich die Kabel-Zuführrichtung Z in das Blatt hinein. Fign. 4 und 5 zeigen die Greifeinheit in der geschlossenen Stellung. Fig. 6 zeigt die Greifeinheit in der geöffneten Stellung.

Wie in Fig. 4 dargestellt, weisen die zwei Greiferbacken 2, 3 jeweils eine Betätigungsschnittstelle 11, 12 für den Aktor 10 auf. Die erste Betätigungsschnittstelle 11 der ersten Greiferbacke 2 ist an dem ersten Arm 8 ausgebildet. Die zweite Betätigungsschnittstelle 12 der zweiten Greiferbacke 3 ist an dem zweiten Arm 9 ausgebildet. In Fig. 4 ist zudem zu erkennen, dass sich der bügelförmige Arm 8 mit dem geraden Arm 9 überlagert.

Die Werkzeuge 4, 5 können direkt an dem jeweiligen Arm 8, 9 ausgebildet sein oder austauschbar und lösbar an dem jeweiligen Arm 8, 9 anbringbar oder angebracht sein.

Wie in Fign. 5 und 6 dargestellt, weisen die zwei Greiferbacken 2, 3 (bzw. die Arme 8, 9) jeweils eine Werkzeugaufnahme 13 zur lösbaren Aufnahme des jeweiligen Werkzeugs 4, 5 auf. Die Werkzeugaufnahme 13 weist eine Formschlussgeometrie 14 zur Steckverbindung mit dem jeweiligen Werkzeug 4, 5 auf, auf welche das jeweilige Werkzeug 4, 5 insbesondere in der Greifer-Betätigungsrichtung B bzw. in der Vertikalrichtung von oben aufsteckbar ist. Die Werkzeugaufnahme 13 weist eine Schraubenaufnahme 15 zum Anschrauben des jeweiligen Werkzeugs 4, 5 auf, an welche das jeweilige Werkzeug 4, 5 insbesondere in der Kabel-Zuführrichtung Z anschraubbar ist.

In Fign. 4 bis 6 ist auch zu erkennen, dass eine Werkzeugschnittstelle der ersten Greiferbacke 2, die in der dargestellten Ausführungsform durch die Werkzeugaufnahme 13 zur lösbaren Werkzeugaufnahme gebildet ist, an einem (oberen) ersten Schenkel 16, insbesondere an einem freien Ende des ersten Schenkels 16, des bügelförmigen ersten Arms 8 ausgebildet ist.

In Fign. 4 bis 6 ist auch zu erkennen, dass die Betätigungsschnittstelle 11 der ersten Greiferbacke 2 an einem (unteren) zweiten Schenkel 17, insbesondere an einem freien Ende des zweiten Schenkels 17, des bügelförmigen ersten Arms 8 ausgebildet ist.

### Bezugszeichenliste

- 1: Zentriervorrichtung
- 2: erste Greiferbacke
- 3: zweite Greiferbacke
- 4: erstes Werkzeug
- 5: zweites Werkzeug
- 6: erstes Werkzeugkontur
- 7: zweites Werkzeugkontur
- 8: erster Arm
- 9: zweiter Arm
- 10: Aktor
- 11: erste Betätigungsschnittstelle
- 12: zweite Betätigungsschnittstelle
- 13: Werkzeugaufnahme
- 14: Formschlussaufnahme
- 15: Schraubenaufnahme
- 16: erster Schenkel
- 17: zweiter Schenkel

- B: Greifer-Betätigungsrichtung
- Z: Kabel-Zuführrichtung

## Patentansprüche

1. Zentriervorrichtung (1) zur ausgerichteten Aufnahme eines, insbesondere mehradrigen, Kabels, mit einer Greifeinheit aus zwei Greiferbacken (2, 3), die zum Öffnen und Schließen der Greifeinheit in einer Greifer-Betätigungsrichtung (B), insbesondere in jeweils zueinander entgegengesetzte Richtungen, linear verschieblich sind und jeweils ein Werkzeug (4, 5) mit einer Werkzeugkontur (6, 7) aufweisen, wobei die Werkzeugkonturen (6, 7) in der Greifer-Betätigungsrichtung (B) einander zugewandt sind, und wobei sich die Werkzeugkonturen (6, 7) entlang einer zur Greifer-Betätigungsrichtung (B) senkrechten Kabel-Zuführrichtung (Z) erstrecken, um zumindest eine Ader, insbesondere mehrere Adern, des Kabels aufzunehmen, **dadurch gekennzeichnet, dass**
eine erste Greiferbacke (2) der zwei Greiferbacken (2, 3) einen Arm (8) aufweist, der sich ausgehend von dem Werkzeug (4) mit einem im Wesentlichen bügelförmigen Verlauf erstreckt, wobei eine Öffnung des bügelförmigen Verlaufs senkrecht zur Greifer-Betätigungsrichtung (B) und senkrecht zur Kabel-Zuführrichtung (Z) ausgerichtet ist.

2. Zentriervorrichtung (1) nach Anspruch 1, **dadurch gekennzeichnet, dass** die Greifeinheit zwischen einer geöffneten Stellung und einer geschlossenen Stellung betätigbar ist, wobei eine zweite Greiferbacke (3) der zwei Greiferbacken (2, 3) und die Öffnung in der geöffneten Stellung der Greifeinheit zueinander versetzt in der Greifer-Betätigungsrichtung (B) angeordnet sind.

3. Zentriervorrichtung (1) nach Anspruch 1 oder 2, **dadurch gekennzeichnet, dass** der Arm (8) der ersten Greiferbacke (2) eine Werkzeugschnittstelle (13) für das Werkzeug (4) und eine Betätigungsschnittstelle (11) für einen Aktor (10) aufweist, wobei die Werkzeugschnittstelle (13) an einem ersten Schenkel (16) des bügelförmigen Verlaufs und die Betätigungsschnittstelle (11) an einem zweiten Schenkel (17) des bügelförmigen Verlaufs ausgebildet ist.

4. Zentriervorrichtung (1) nach Anspruch 3, **dadurch gekennzeichnet, dass** die Werkzeugschnittstelle (13) an einem freien Ende des ersten Schenkels (16) ausgebildet ist und/oder die Betätigungsschnittstelle (11) an einem freien Ende des zweiten Schenkels (17) ausgebildet ist.

5. Zentriervorrichtung (1) nach einem der Ansprüche 1 bis 4, **dadurch gekennzeichnet, dass** die zwei Greiferbacken (2, 3) jeweils eine Werkzeugaufnahme (13) zur lösbaren Aufnahme des jeweiligen Werkzeugs (4, 5) aufweisen.

6. Zentriervorrichtung (1) nach einem der Ansprüche 2 bis 5, **dadurch gekennzeichnet, dass** die Werkzeugkonturen (6, 7) ausgebildet sind, die zumindest eine Ader des Kabels in der geschlossenen Stellung der Greifeinheit klemmend zu halten.

7. Zentriervorrichtung (1) nach einem der Ansprüche 1 bis 6, mit einem Aktor (10), insbesondere Linearaktor, zur Betätigung der Greifeinheit, **dadurch gekennzeichnet, dass** der Aktor (10) ausgebildet ist, die zwei Greiferbacken (2, 3) synchronisiert zu betätigen.

8. Zentriervorrichtung (1) nach Anspruch 7, **dadurch gekennzeichnet, dass** der Aktor (10) so ausgebildet ist, dass die zwei Greiferbacken (2, 3) zum Öffnen und Schließen jeweils einen zueinander betragsmäßig gleichen Hub haben.

9. System aus einer Bearbeitungsstation zum Bearbeiten des Kabels und einer Zentriervorrichtung (1) nach einem der Ansprüche 1 bis 8, **dadurch gekennzeichnet, dass** die Bearbeitungsstation und die Zentriervorrichtung (1) quer zur Kabel-Zuführrichtung (Z) zueinander versetzt angeordnet sind.

10. Verfahren zum Betreiben einer Zentriervorrichtung (1) nach einem der Ansprüche 1 bis 8, mit den folgenden Schritten:
- Zuführen des Kabels entlang der Kabel-Zuführrichtung (Z),
- Schließen der Greifeinheit,
- Öffnen der Greifeinheit,
- Herausführen des Kabels entlang der Kabel-Zuführrichtung (Z),
**dadurch gekennzeichnet, dass** das Zuführen und das Herausführen in derselben Richtung entlang der Kabel-Zuführrichtung (Z) erfolgt, wobei ein freies Ende des Kabels beim Zuführen oder Herausführen durch den bügelförmigen Verlauf des Arms (8) der ersten Greiferbacke (2) hindurchgeführt wird.
